# EUROPEAN PATENT SPECIFICATION

(11) **EP 3 089 506 B1**
(45) Date of publication and mention of the grant of the patent: **29.07.2020**
(21) Application number: 13899998.2
(22) Date of filing: 26.12.2013
(51) Int. Cl.: H04W 36/00

(54) **CHANNEL MEASUREMENT CONFIGURATION DEVICES AND SYSTEM**
KANALMESSUNG KONFIGURATIONSVORRICHTUNGEN UND SYSTEM
DISPOSITIFS ET SYSTÈME DE CONFIGURATION DE MESURE DE CANAL

(43) Date of publication of application: 02.11.2016
(73) Proprietor: Fujitsu Limited, Kawasaki-shi, Kanagawa 211-8588 (JP)
(72) Inventor: LU, Yanling, Beijing 100025 (CN); XU, Yueqiao, Beijing 100025 (CN); XU, Haibo, Beijing 100025 (CN)
(74) Representative: Haseltine Lake Kempner LLP
(86) International application number: PCT/CN2013/090545
(87) International publication number: WO 2015/096088

(56) References cited:
- EP-A1- 2 566 228
- EP-A1- 2 654 338
- CN-A- 101 064 898
- CN-A- 102 014 425
- CN-A- 102 026 264
- POTEVIO: "Measurement in dual connectivity", 3GPP DRAFT; R2-133243_MEASUREMENT IN DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 27 September 2013 (2013-09-27), XP050718942, Retrieved from the Internet: URL:http://www.3gpp.org/ftp/tsg_ran/WG2_RL 2/TSGR2_83bis/Docs/ [retrieved on 2013-09-27]
- ITL INC: "PCell for SeNB", 3GPP DRAFT; R2-134216, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20131111 - 20131115 13 November 2013 (2013-11-13), XP050736964, Retrieved from the Internet: URL:http://www.3gpp.org/ftp/Meetings_3GPP_ SYNC/RAN/RAN2/Docs/ [retrieved on 2013-11-13]
- NSN ET AL: "On the need of PCell functionality in SeNB", 3GPP DRAFT; R2-134188 PCELL IN SENB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20131111 - 20131115 13 November 2013 (2013-11-13), XP050736944, Retrieved from the Internet: URL:http://www.3gpp.org/ftp/Meetings_3GPP_ SYNC/RAN/RAN2/Docs/ [retrieved on 2013-11-13]
- INTERDIGITAL COMMUNICATIONS: "Special Cell for SeNB with Dual Connectivity", 3GPP DRAFT; R2-134398 (REL-12 LTE SCE SI - SPECIAL CELL FOR SENB), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. San Francisco, USA; 20131111 - 20131115 13 November 2013 (2013-11-13), XP050737108, Retrieved from the Internet: URL:http://www.3gpp.org/ftp/Meetings_3GPP_ SYNC/RAN/RAN2/Docs/ [retrieved on 2013-11-13]
- ALCATEL-LUCENT ET AL: "Dual connectivity configuration: framework", 3GPP DRAFT; R2-134377 SMALL CELL DUAL CONNECTIVITY FRAMEWORK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, U.S.A.; 20131111 - 20131115 2 November 2013 (2013-11-02), XP050753459, Retrieved from the Internet: URL:http://www.3gpp.org/ftp/tsg_ran/WG2_RL 2/TSGR2_84/Docs/ [retrieved on 2013-11-02]
- CMCC ET AL: "Measurement Report Triggering for Dual Connectivity", 3GPP DRAFT; R2-142320_MEASUREMENT REPORT TRIGGERING FOR DC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 9 May 2014 (2014-05-09), XP050818440, Retrieved from the Internet: URL:http://www.3gpp.org/ftp/tsg_ran/WG2_RL 2/TSGR2_86/Docs/ [retrieved on 2014-05-09]
- CATT ET AL: "RLM considerations for dual connectivity", 3GPP DRAFT; R2-134053, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA 13 November 2013 (2013-11-13), XP050736857, Retrieved from the Internet: URL:http://www.3gpp.org/ftp/Meetings_3GPP_ SYNC/RAN/RAN2/Docs/ [retrieved on 2013-11-13]

## Description

### Field

The present disclosure relates to the field of communications, and in particular to a method for configuring channel measurement, a channel measurement method, an apparatus and a communication system.

### Background

In a carrier aggregation (CA) system, multiple carriers are aggregated, and may communicate with an individual terminal (user equipment, UE) at the same time, that is, the terminal has multiple serving cells. In the multiple serving cells, one of them is a primary cell (PCell), and others are secondary cells (SCells). In an existing CA system, all aggregated cells are under the same eNB, and belong to a CA system of the same eNB.

In the CA system, the PCell is used to carry physical uplink control channels (PUCCHs). In the PUCCH, much physical layer control information such as a channel quality indicator (CQI), acknowledgement/negative acknowledgement (ACK/NAK), and a scheduling request (SR), etc., are included. If there is no reliable transmission of these control information, communications of the terminal will fail. Hence, the PCell of the terminal must have relatively good channel conditions.

In order to ensure that the PCell of the terminal has relatively good channel conditions, in an existing CA system, an eNB needs to perform measurement configuration for the terminal, and the terminal measures related cells and frequencies according to the measurement configuration, and reports a measurement result to the eNB when conditions indicated by the measurement configuration are satisfied. Hence, the eNB may decide whether to change a PCell for the terminal according to the received measurement result of the terminal and some other factors.

And on the other hand, in a current LTE-A (long term evolution-advanced) system, a macro cell is mainly deployed. As an amount of traffics increases in the future, it is possible to proceed with deploying small cells. Coverage areas of the small cells are relatively small, but the number is relatively large. Thus, if deployment of small cells is only performed simply, without performing optimization of control and structures, many problems, such as the robustness of mobility being lowered, and load of control signaling being increased, etc., will occur. In order to solve these problems, and at the same time, to increase flow rates of individual user equipment, a new-type of network protocol structure, dual connectivity, is proposed in the industry. In the dual connectivity structure, a terminal may communicate with multiple eNBs at the same time. For example, the terminal may communication with a macro eNB and a small cell eNB at the same time, or may communication with two small cell eNBs at the same time. In the eNBs communicating with the terminal at the same time, one of them provides the terminal with a control interface between the terminal and a core network, and this eNB is referred to as master eNB (MeNB). Other eNBs communicating with the terminal at the same time than the MeNB are referred to as secondary eNBs (SeNBs). At the same time, in serving cells of the terminal, cell groups associated with the MeNB are referred to as master cell groups (MCGs), and cell groups associated with the SeNBs are referred to as secondary cell groups (SCGs).

In a small cell system, the terminal needs still to transmit PUCCHs in an uplink, and in the small cell system, the terminal has different PUCCHs at different eNBs. How to ensure that cells carrying PUCCHs in an SeNB of a small cell system have relatively good channel conditions to ensure efficient transmission of all cells in an SCG is a direction of studies of the industry.

"Measurement in dual connectivity" by Potevio, 3GPP TSG-RAN WG2 Meeting #83bis, Ljubljana, Slovenia, R2-133243, available at www.3gpp.org/ftp/tsg_ran/WG2_RL2/TSGR2_83bis/Docs/ as of 27 September 2013 discloses an analysis of some measurement issues in dual connectivity for 3GPP systems, and presents problems to be solved.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

In an MCG of a small cell system, a PCell is used to transmit a PUCCH to which an MeNB corresponds; and in an SCG of the small cell system, a special SCell, referred to as an SPCell (secondary primary cell), is used to transmit a PUCCH to which an SeNB corresponds. As described in the Background, in order to ensure efficient transmission of PUCCHs, good channel conditions are needed for the SPCell. However, as the SPCell and the PCell are in different cell groups at the present, their channel conditions are incomparable any longer, and there are currently no measurement configuration and measurement process specifically used for efficient management of the SPCell, hence, that the SPCell having relatively good channel conditions cannot be well ensured.

Embodiments of the present disclosure provide an apparatus for configuring measurement, a measurement apparatus and a communication system, so as to solve the problems of efficient management of cells carrying PUCCHs in an SeNB in a small cell system and ensuring that they have relatively good channel conditions.

According to a first aspect of the embodiments of the present disclosure, there is provided an apparatus for configuring channel measurement, including:
a configuring unit configured to configure a terminal with a measurement object and reporting configuration;
wherein the measurement object indicates a frequency needing to be measured, and the reporting configuration indicates a measurement report criteria,
the measurement report criteria being satisfied when a measurement result of a neighboring cell on the frequency indicated in the measurement object is better than a sum of a measurement result of a serving cell configured for transmission of PUCCH associated with a secondary eNB and a predefined order value, or
the measurement report criteria being satisfied when a measurement result of a neighboring cell on the frequency indicated in the measurement object is better than a first threshold value and a measurement result of the serving cell configured for transmission of PUCCH associated with the secondary eNB is worse than a second threshold value.

According to a second aspect of the embodiments of the present disclosure, there is provided a channel measurement apparatus, including:
a receiving unit configured to receive a configuration message transmitted by an eNB;
wherein the configuration message includes a measurement object and reporting configuration, the measurement object indicating a frequency needing to be measured, and the reporting configuration indicating a measurement report criteria,
the measurement report criteria being satisfied when a measurement result of a neighboring cell on the frequency indicated in the measurement object is better than a sum of a measurement result of a serving cell configured for transmission of PUCCH associated with a secondary eNB and a predefined order value, or
the measurement report criteria being satisfied when a measurement result of a neighboring cell on the frequency indicated in the measurement object is better than a first threshold value and a measurement result of the serving cell configured for transmission of PUCCH associated with the secondary eNB is worse than a second threshold value; and
a measuring unit configured to measure the serving cell and a cell on the frequency needing to be measured indicated in the measurement object according to the configuration message, and report a measurement result when the measurement report criteria indicated in the reporting configuration is satisfied.

According to a third aspect of the embodiments of the present disclosure, there is provided a communication system, including an eNB and a terminal, wherein,
the eNB is adapted to configure the terminal with a measurement object and reporting configuration; wherein the measurement object indicates a frequency needing to be measured, and the reporting configuration indicates a measurement report criteria,
the measurement report criteria being satisfied when a measurement result of a neighboring cell on the frequency indicated in the measurement object is better than a sum of a measurement result of a serving cell configured for transmission of PUCCH associated with a secondary eNB and a predefined order value, or
the measurement report criteria being satisfied when a measurement result of a neighboring cell on the frequency indicated in the measurement object is better than a first threshold value and a measurement result of the serving cell configured for transmission of PUCCH associated with the secondary eNB is worse than a second threshold value;
and the terminal is adapted to measure the serving cell and a cell on the frequency needing to be measured indicated in the measurement object according to the measurement object and reporting configuration, and reports a measurement result when the measurement report criteria indicated in the reporting configuration is satisfied.

An advantage of the embodiments of the present disclosure exists in that with the methods, apparatuses and communication system of the embodiments of the present disclosure, the problems of efficient management of cells carrying PUCCHs in an SeNB in a small cell system and ensuring that the cells have relatively good channel conditions are solved.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the exemplary embodiments of the present disclosure, and are used for setting forth the principles of the present disclosure together with the description. It is clear and understood that the accompanying drawings in the following description are some embodiments of the present disclosure only, and a person of ordinary skill in the art may obtain other accompanying drawings according to these accompanying drawings without making an inventive effort. In the drawings:
FIG. 1 is a flowchart of the method for configuring channel measurement of Embodiment 1 of the present disclosure;
FIG. 2 is a schematic diagram of information interaction between an eNB and a terminal under an implementation according to the method of Embodiment 1;
FIG. 3 is a schematic diagram of information interaction between an eNB and a terminal under another implementation according to the method of Embodiment 1;
FIG. 4 is a schematic diagram of a structure of an implementation of the apparatus for configuring channel measurement of Embodiment 2 of the present disclosure;
FIG. 5 is a schematic diagram of a structure of another implementation of the apparatus for configuring channel measurement of Embodiment 2 of the present disclosure;
FIG. 6 is a schematic diagram of a structure of a further implementation of the apparatus for configuring channel measurement of Embodiment 2 of the present disclosure;
FIG. 7 is a schematic diagram of a structure of the eNB of Embodiment 3 of the present disclosure;
FIG. 8 is a flowchart of the channel measurement method of Embodiment 4 of the present disclosure;
FIG. 9 is a schematic diagram of a structure of an implementation of the channel measurement apparatus of Embodiment 5 of the present disclosure;
FIG. 10 is a schematic diagram of a structure of the UE of Embodiment 6 of the present disclosure; and
FIG. 11 is a schematic diagram of a structure of the communication system of Embodiment 7 of the present disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the scope of the appended claims. Various embodiments of the present disclosure shall be described below with reference to the accompanying drawings. These embodiments are illustrative only, and are not intended to limit the present disclosure.

### Embodiment 1

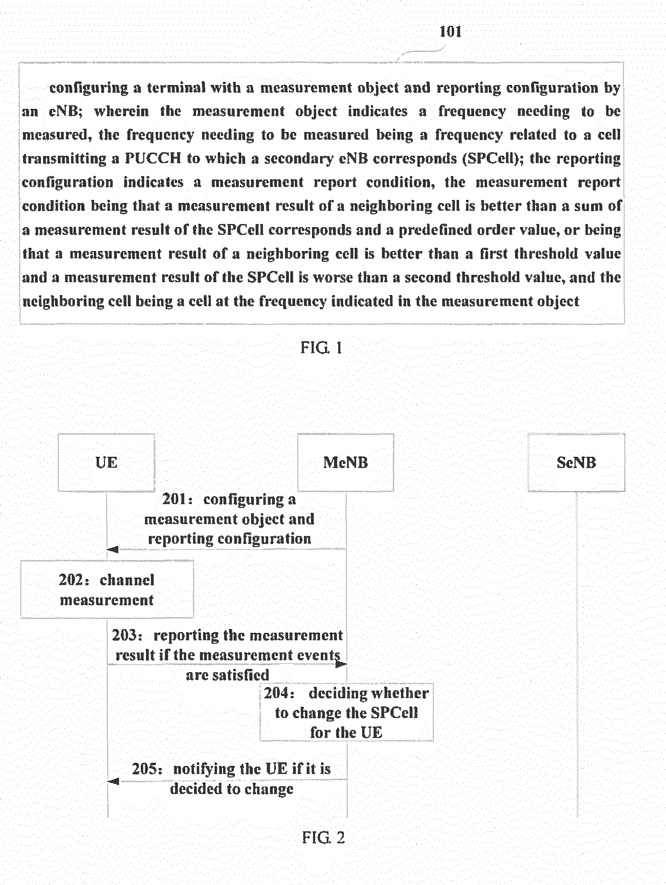

An embodiment of the present disclosure provides a method for configuring channel measurement. FIG. 1 is a flowchart of the method. Referring to FIG. 1, the method includes:
step 101: configuring a terminal with a measurement object and reporting configuration by an eNB; wherein the measurement object indicates a frequency needing to be measured, the frequency needing to be measured being a frequency related to a cell transmitting a PUCCH to which a secondary eNB corresponds (SPCell); the reporting configuration indicates a measurement report condition, the measurement report condition being that a measurement result of a neighboring cell is better than a sum of a measurement result of the SPCell corresponds and a predefined order value, or being that a measurement result of a neighboring cell is better than a first threshold value and a measurement result of the SPCell is worse than a second threshold value, and the neighboring cell being a cell at the frequency indicated in the measurement object.

In this embodiment, a new measurement event is defined for a cell transmitting a PUCCH to which an SeNB corresponds (SPCell). In the new measurement event, a measurement result of a neighboring cell being better than a channel measurement result of the SPCell and exceeding a certain order value is taken as the measurement report condition. The new measurement event may also be that a measurement result of a neighboring cell is better than a threshold value (a first threshold value), and at the same time, the channel measurement result of the SPCell is worse than a threshold value (a second threshold value). Therefore, the terminal may report the measurement result when its measurement result satisfies the measurement event, thereby ensuring that the SPCell has relatively good channel conditions. In this embodiment, the above-described order value, the first threshold value and the second threshold value are all predefined, and this embodiment is not limited thereto. In an implementation of this embodiment, the new measurement event may be denoted by an event A7.

In this embodiment, the frequency indicated by the measurement object may be a frequency at which a cell in a secondary cell group or at a secondary cell eNB of the terminal is, except the frequency at which the cell transmitting a PUCCH to which a secondary eNB corresponds is, may be a frequency at which a cell in a secondary cell group or at a secondary cell eNB of the terminal is, may be a frequency different from a frequency at which a cell in a primary cell group or at a primary cell eNB of the terminal is, may be a frequency different from a frequency at which a cell transmitting a PUCCH to which a primary eNB corresponds is, may be a frequency different from a frequency at which the cell transmitting a PUCCH to which a secondary eNB corresponds is, and may also be a frequency different from a frequency at which a cell transmitting a PUCCH to which a primary eNB corresponds is and a frequency at which the cell transmitting a PUCCH to which a secondary eNB corresponds is. The above frequencies may be configured with the above new measurement event; however, this embodiment is not limited thereto, and any frequencies related to an SPCell may be taken as the above frequencies needing to be performed channel measurement and contained in the measurement object.

In this embodiment, besides the above new measurement event indicating the measurement report condition, the reporting configuration may further include such information as a reporting format, and a time requirement, etc., and when the terminal reports the measurement result to the eNB, it may report the measurement result according to the format and the time requirement specified in the reporting configuration.

With the method of this embodiment, the terminal may measure its serving cells and the cells at the frequencies indicated by the measurement object according to the measurement object and the reporting configuration configured by the eNB for it, at the same time, check whether the above new measurement event is satisfied, and report the measurement result to the eNB according to the format and time requirement specified in the reporting configuration if the new measurement event is satisfied. Hence, the eNB may decide whether to change an SPCell for the terminal according to the measurement result and some other factors, thereby solving a problem of keeping that the cell transmitting the PUCCH to which the secondary eNB corresponds in the small cell system has relatively good channel conditions.

In an implementation of this embodiment, the measurement object may further include a frequency regarding to the PCell or the SCell, that is, a frequency related to the PCell or the SCell, and correspondingly, the reporting configuration may include measurement events related to the PCell or the SCell.

In this implementation, the measurement events related to the PCell may be events A1, A2, A3 and A5 defined in an existing CA system, and the measurement events related to the SCell may be events A1, A2 and A6 defined in the existing CA system.

In this implementation, the event A1 is that the measurement result of the serving cell (the PCell or the SCell) is better than a threshold value; the event A2 is that the measurement result of the serving cell (the PCell or the SCell) is worse than a threshold value; the event A3 is that the measurement result of the neighboring cell is better than a sum of the measurement result of the PCell and an order value; here, the frequency at which the neighboring cell is may be different from the frequency at which the PCell is, and the neighboring cell may be an SCell or a non-serving cell; the event A5 is that the measurement result of the PCell is worse than a threshold value, and at the same time, the measurement result of the neighboring cell is better than a threshold value; here, the frequency at which the neighboring cell is may be different from the frequency at which the PCell is, and the neighboring cell may be an SCell or a non-serving cell; and the event A6 is that the measurement result of the neighboring cell (a non-serving cell) is better than a sum of the measurement result of the SCell and an order value; here, the neighboring cell and the SCell are at the same frequency. In this implementation, the above threshold values or order values are all predefined, and this embodiment is not limited thereto.

In this implementation, the system defined more complete measurement events for PCell, that is, A1, A2, A3 and A5, and besides an absolute value comparison of the measurement result of itself with a threshold value, absolute value comparisons and relative value comparisons of the measurement result of itself with measurement results of other intra-frequency cells or inter-frequency cells are further defined. In a practical system, the event A3 or the event A5 is a measurement event relatively often used for judging whether needs to change the PCell. If the terminal is configured with the event A3 or the event A5 in its reporting configuration, when the measurement object is the frequency at which the PCell is, the terminal may perform the comparisons between the intra-frequency cells; and if the measurement object is not the frequency at which the PCell is, the terminal may perform the comparisons between the inter-frequency cells; of course, the eNB may also configure multiple measurement objects corresponding to the same reporting configuration, and the terminal may perform the comparisons of the PCell with the intra-frequency cells and the inter-frequency cells at the same time.

In this implementation, the system only defines the events A1, A2 and A6 for the SCell. In this implementation, the A1 and A2 are an absolute value comparison between own measurement results with a threshold value, and the A6 is only a comparison between intra-frequency cells.

In this embodiment, the measurement object may be associated with the reporting configuration via measurement identification, each measurement identification corresponding to a combination of a measurement object and reporting configuration. Hence, the eNB may directly indicate a combination of said measurement object and reporting configuration via measurement identification.

In this embodiment, a particular configuration method is not limited, and any existing configuration method may be applicable to the method of the embodiment of the present disclosure. For example, the eNB may configure the terminal with said measurement object and reporting configuration by transmitting a configuration message to the terminal, and may also configure the terminal with said measurement object and reporting configuration in a manner of combination of a configuration message and an advanced agreement. The configuration message may be carried by a radio resource control (RRC) connection reconfiguration message, and may also be carried by other messages, and this embodiment is not limited thereto.

In an implementation of this embodiment, if the eNB receives the measurement result fed back by the terminal, and the eNB is an eNB deciding whether to change an SPCell for the terminal, the eNB may decide whether to change the SPCell for the terminal according to the measurement result and a decision factor, such as payloads of the eNB in carriers, etc. And if the eNB decides to change an SPCell for the terminal, the eNB may notify the terminal of changing the SPCell in a downlink. In particular, a message carrying the changing of the SPCell is not limited in this embodiment; and if the eNB decides not to change the SPCell for the terminal, the eNB may perform subsequent processing, particular processing being identical to that in the prior art, and being not going to be described herein any further.

FIG. 2 is a schematic diagram of information interaction between an eNB and a terminal under this implementation according to the method of this embodiment. In this implementation, taking that the eNB is an MeNB in a small cell system as an example. In particular implementation, the eNB may also be an SeNB in the small cell system. As shown in FIG. 2, the process of interaction includes steps of:
step 201: MeNB configures UE with a measurement object and reporting configuration;
wherein, the measurement object indicates a frequency needing to be performed channel measurement, the frequency being a frequency related to the SPCell; the reporting configuration indicates the above-described new measurement events, that is, a measurement report condition is that a measurement result of a neighboring cell is better than a measurement result of the SPCell and exceeds a certain order value, or that the measurement result of the neighboring cell is better than a first threshold value, and at the same time, the measurement result of the SPCell is worse than a second threshold value;
step 202: UE measures its serving cell and cells at the frequencies indicated by the measurement object, and checks whether the measurement result satisfies the above measurement events;
step 203: UE reports the measurement result to the MeNB if it is determined in step 202 that the above measurement events are satisfied;
step 204: the MeNB decides whether to change the SPCell for the UE according to the measurement result reported by the UE and some other factors; and
step 205: the MeNB notifies the UE of changing an SPCell for the UE if it is decided in step 204 that changing an SPCell for the UE.

With the method of this implementation, the measurement process regarding to the SPCell is proposed, and the problem of keeping that the cell transmitting the PUCCH to which the secondary eNB corresponds in the small cell system has relatively good channel conditions is solved. Of course, this embodiment is not limited to what is shown in FIG 2, and in other implementations, as described above, the measurement object and reporting configuration configured by the eNB for the UE may also be directed to the PCell and/or the SCell at the same time, a particular implementation of the measurement process(es) regarding to the PCell and/or the SCell being identical to the prior art, and being not going to be described herein any further.

In another implementation of this embodiment, if the eNB receives the measurement result fed back by the terminal, but the eNB is not the eNB deciding whether to change an SPCell for the terminal, for example, the eNB is an MeNB, while the eNB deciding whether to change an SPCell for the terminal is an SeNB, the eNB transmits the measurement result of the terminal to the eNB deciding whether to change an SPCell for the terminal, that is, an SeNB, and the SeNB decides whether to change an SPCell for the terminal according to the measurement result of the terminal and a decision factor. In this implementation, the measurement result of the terminal may be a direct copy of the measurement result transmitted by the terminal to the MeNB, containing the measurement result of the SPCell and the measurement result of the serving cell in the MCG, and may also be a modification of the measurement result transmitted by the terminal to the MeNB made by the MeNB according to a situation, such as containing the measurement result of the SPCell, but not containing the measurement result of the serving cell in the MCG. If the SeNB decides to change an SPCell for the terminal, it will transmit the judgment result to the eNB of the embodiment of the present disclosure, i.e. the above-described MeNB, and if the eNB receives the information on changing the SPCell for the terminal fed back by the SeNB, the eNB notifies the terminal in a downlink that the SPCell is to be changed. In this implementation, the information interaction between the MeNB and the SeNB may be realized via an X2 interface; however, this embodiment is not limited thereto.

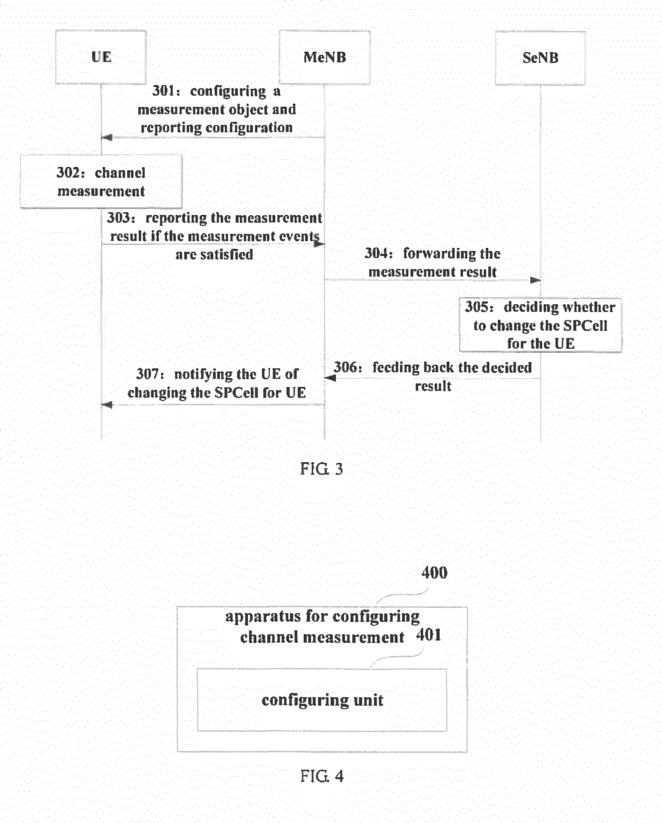

FIG. 3 is a schematic diagram of information interaction between the eNB and the terminal under this implementation according to the method of this embodiment. In this implementation, taking that the eNB receiving the measurement result reported by the terminal is an MeNB in the small cell system and the eNB deciding whether to change an SPCell for the terminal is an SeNB carrying the SPCell in the small cell system as an example. However, in particular implementation, the eNB receiving the measurement result reported by the terminal may also be an SeNB in the small cell system.

As shown in FIG. 3, the process of interaction includes steps of:
step 301: MeNB configures UE with a measurement object and reporting configuration;
wherein, implementations of the measurement object and the reporting configuration are identical to those in step 201 of the implementation shown in FIG 2, the contents of which being incorporated herein, and being not going to be described herein any further;
step 302: UE measures its serving cell and cells at the frequencies indicated by the measurement object, and checks whether the measurement result satisfies the above measurement events;
step 303: UE reports the measurement result to the MeNB if it is determined in step 302 that the above measurement events are satisfied;
step 304: the MeNB forwards the measurement result of the UE to the SeNB;
wherein, the measurement result of the UE may be a direct copy of the measurement result reported by the UE, and may also be a modification of the measurement result reported by the UE, which are as described above, and shall not be described herein any further; and at the same time, the MeNB may forward the above measurement result of the UE to the SeNB via an X2 interface;
step 305: SeNB decides whether to change the SPCell for the UE according to the above measurement result and some other factors;
step 306: SeNB feeds back the decided result to the MeNB if it is decided in step 305 that changing an SPCell for the UE;
wherein, the SeNB may feed back the decided result to the MeNB via an X2 interface;
step 307: MeNB notifies the UE in a downlink of changing the SPCell for the UE.

With the method of this implementations, the measurement process regarding to the SPCell is proposed, and the problem of keeping that the cell transmitting the PUCCH to which the secondary eNB corresponds in the small cell system has relatively good channel conditions is solved. Of course, this embodiment is not limited to what is shown in FIGs. 2 and 3, and in other implementations, as described above, the measurement object and reporting configuration configured by the eNB for the UE may also be directed to the PCell and/or the SCell at the same time, a particular implementation of the measurement process(es) regarding to the PCell and/or the SCell being identical to the prior art, and being not going to be described herein any further.

With the method for configuring channel measurement of this embodiment, new measurement events are defined for the SPCell, thereby efficiently ensuring the channel conditions of the SPCell.

An embodiment of the present disclosure provides an apparatus for configuring channel measurement, as described in Embodiment 2 below. As principles of the apparatus for configuring channel measurement are similar to that of the method of Embodiment 1, the implementation of the method of Embodiment 1 may be referred to for the implementation of the apparatus, with identical contents being not going to be described herein any further.

### Embodiment 2

An embodiment of the present disclosure provides an apparatus for configuring channel measurement, applicable to an eNB (such as an MeNB or an SeNB) in a small cell system. FIG. 4 is a schematic diagram of a structure of the apparatus 400 for configuring channel measurement. As shown in FIG. 4, the apparatus 400 for configuring channel measurement includes:
a configuring unit 401 configured to configure a terminal with a measurement object and reporting configuration; wherein the measurement object indicates a frequency needing to be measured, and the reporting configuration indicates a measurement report condition, the measurement report condition being that a measurement result of a neighboring cell is better than a sum of a measurement result of a cell transmitting a PUCCH to which a secondary eNB corresponds (SPCell) and a predefined order value, or being that a measurement result of a neighboring cell is better than a first threshold value, and at the same time, a measurement result of the SPCell is worse than a second threshold value, and the neighboring cell being a cell at the frequency indicated in the measurement object.

In this embodiment, the frequency indicated by the measurement object may be a frequency at which a cell in a secondary cell group or at a secondary cell eNB of the terminal is, except the frequency at which the SPCell is, may be a frequency at which a cell in a secondary cell group or at a secondary cell eNB of the terminal is, may be a frequency different from a frequency at which a cell in a primary cell group or at a primary cell eNB of the terminal is, may be a frequency different from a frequency at which a cell transmitting a PUCCH to which a primary eNB corresponds (PCell) is, may be a frequency different from a frequency at which the SPCell is, and may also be a frequency different from a frequency at which the PCell is and a frequency at which the SPCell is. Of course, as described above in Embodiment 1, this embodiment is not limited thereto.

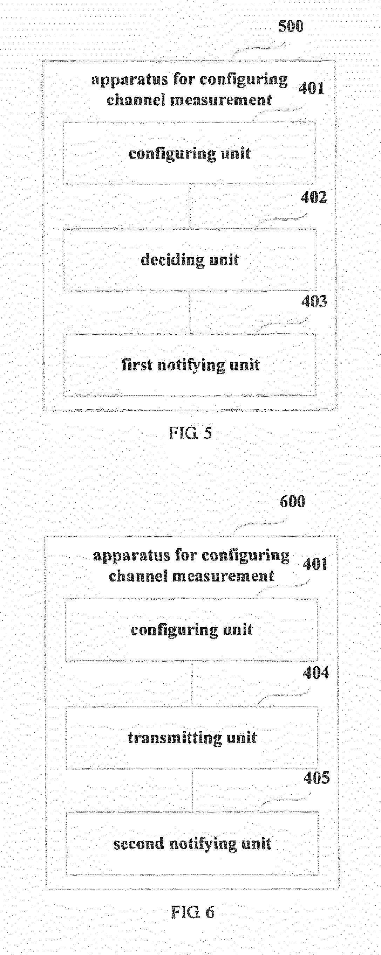

In an implementation of this embodiment, besides the configuring unit 401, the apparatus for configuring channel measurement may further includes a deciding unit 402 and a first notifying unit 403. FIG 5 is a schematic diagram of a structure of the apparatus 500 for configuring channel measurement of this implementation. As shown in FIG. 5, in this implementation, when the eNB receives the measurement result fed back by the terminal, the deciding unit 402 decides whether to change an SPCell for the terminal according to the measurement result and a decision factor. And the first notifying unit 403 notifies the terminal to change the SPCell in a downlink when the deciding unit 402 decides to change the SPCell for the terminal. In this implementation, as described above, the decision factor may be payloads of the eNB in carriers, etc., and this embodiment is not limited thereto. In this implementation, the apparatus 500 for configuring channel measurement may further include a receiving unit (not shown) to receive the above measurement result.

In another implementation of this embodiment, besides the above configuring unit 401, the apparatus for configuring channel measurement may further includes a transmitting unit 404 and a second notifying unit 405. FIG. 6 is a schematic diagram of a structure of the apparatus 600 for configuring channel measurement of this implementation. As shown in FIG. 6, when the eNB receives a measurement result fed back by the terminal, the transmitting unit 404 transmits the measurement result to the SeNB, so that the SeNB decides whether to change an SPCell for the terminal according to the measurement result and a decision factor. And when the eNB receives that the SPCell is to be changed for the terminal fed back by the SeNB, the second notifying unit 405 notifies the terminal to change the SPCell in a downlink. In this implementation, the apparatus 600 for configuring channel measurement may further include a receiving unit (not shown) to receive the above measurement result and information on that the SPCell is to be changed for the terminal fed back by the SeNB.

With the apparatus for configuring channel measurement of this embodiment, new measurement events and a complete measurement process are defined for the SPCell in the small cell system, thereby efficiently ensuring the channel conditions of the SPCell in the small cell system.

### Embodiment 3

An embodiment of the present disclosure further provides an eNB, including the apparatus for configuring channel measurement as described in Embodiment 2.

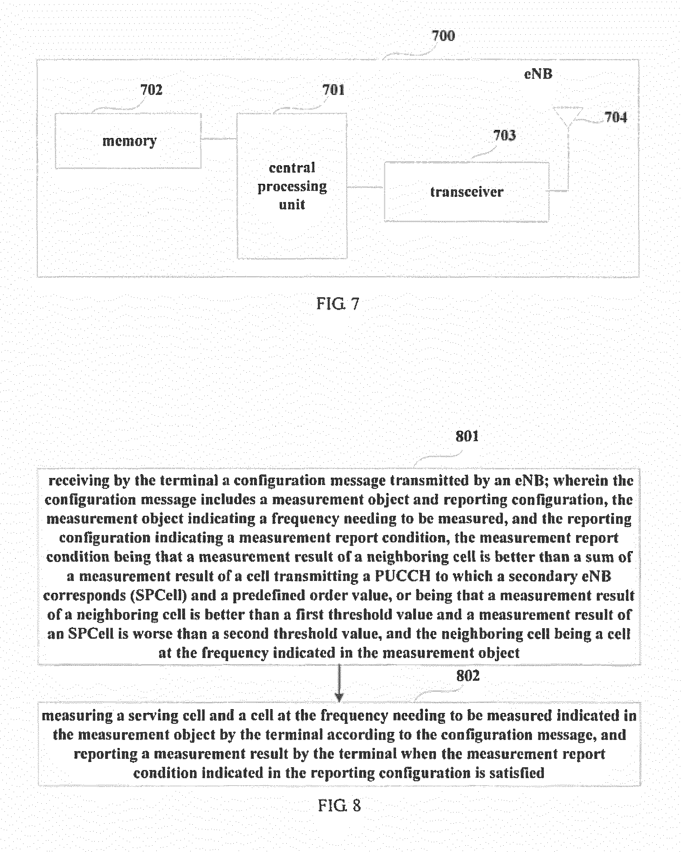

FIG. 7 is a schematic diagram of a structure of the eNB of this embodiment. As shown in FIG. 7, the eNB 700 may include a central processing unit (CPU) 701 and a memory 702, the memory 702 being coupled to the central processing unit 701. In this embodiment, the memory 702 may store various data; and furthermore, it may store a program for information processing, and execute the program under control of the central processing unit 701, so as to receive various information transmitted by the terminal, and transmit various information to the UE.

In an implementation, the functions of the apparatus for configuring channel measurement may be integrated into the central processing unit 701. In this embodiment, the central processing unit 701 may be configured to:
configure a terminal with a measurement object and reporting configuration; wherein the measurement object indicates a frequency needing to be measured, and the reporting configuration indicates a measurement report condition, the measurement report condition being that a measurement result of a neighboring cell is better than a sum of a measurement result of a cell transmitting a PUCCH to which a secondary eNB corresponds (SPCell) and a predefined order value, or being that a measurement result of a neighboring cell is better than a first threshold value and a measurement result of an SPCell is worse than a second threshold value, and the neighboring cell being a cell at the frequency indicated in the measurement object.

In this embodiment, the frequency indicated in the measurement object includes:
a frequency at which a cell in a secondary cell group or at a secondary cell eNB of the terminal is, except the frequency at which the cell transmitting a PUCCH to which a secondary eNB corresponds is; or
a frequency at which a cell in a secondary cell group or at a secondary cell eNB of the terminal is; or
a frequency different from a frequency at which a cell in a primary cell group or at a primary cell eNB of the terminal is; or
a frequency different from a frequency at which a cell transmitting a PUCCH to which a primary eNB corresponds is; or
a frequency different from a frequency at which the cell transmitting a PUCCH to which a secondary eNB corresponds is; or
a frequency different from a frequency at which a cell transmitting a PUCCH to which a primary eNB corresponds is and a frequency at which the cell transmitting a PUCCH to which a secondary eNB corresponds is.

In an implementation, if the eNB receives the measurement result fed back by the terminal, the central processing unit 701 may further be configured to:
decide whether to change the cell transmitting a PUCCH to which an SeNB corresponds for the terminal according to the measurement result and a decision factor.

In this implementation, if it is decided to change the cell transmitting a PUCCH to which an SeNB corresponds for the terminal, the central processing unit 701 may further be configured to:
notify the terminal to change the cell transmitting a PUCCH to which the SeNB corresponds in a downlink.

In an implementation, when the eNB receives the measurement result fed back by the terminal, the central processing unit 701 may further be configured to:
transmit the measurement result to a related SeNB (i.e. the SeNB corresponding to the PUCCH), so that the SeNB decides whether to change the cell transmitting a PUCCH to which an SeNB corresponds for the terminal according to the measurement result and a decision factor. In this implementation, the measurement result transmitted by the eNB to the SeNB may not be a direct copy of the measurement result transmitted by the terminal to the eNB, and the eNB may modify the measurement result transmitted by the terminal to the eNB according to a situation. For example, the measurement result transmitted by the eNB to the SeNB may include a measurement result of an SPCell, but does not include a measurement result of a serving cell in an MCG

In this implementation, if the eNB receives information on that the cell transmitting a PUCCH to which the SeNB corresponds is to be changed for the terminal fed back by the SeNB, the central processing unit 701 may further be configured to:
notify the terminal to change the cell transmitting a PUCCH to which the SeNB corresponds in a downlink.

In another implementation, the apparatus for configuring channel measurement and the central processing unit may be configured separately. For example, the apparatus for configuring channel measurement may be configured as a chip connected to the central processing unit 701, with its functions being realized under control of the central processing unit.

Furthermore, as shown in FIG 7, the eNB 700 may include a transceiver 703, and an antenna 704, etc.; wherein, functions of the above components are similar to those in the prior art, which shall not be described herein any further. It should be noted that the eNB 700 does not necessarily include all the parts shown in FIG. 7, and furthermore, the eNB 700 may include parts not shown in FIG. 7, and the prior art may be referred to.

With the eNB of this embodiment, new measurement events and a complete measurement process are defined for the SPCell in the small cell system, thereby efficiently ensuring the channel conditions of the SPCell in the small cell system.

### Embodiment 4

An embodiment of the present disclosure further provides a channel measurement method, which is processing at a terminal side corresponding to the method of Embodiment 1. As the terminal has been described in detail in Embodiment 1, contents identical to those in Embodiment 1 shall not be described in this embodiment any further. FIG 8 is a flowchart of the method. Referring to FIG. 8, the method includes:
step 801: receiving by the terminal a configuration message transmitted by an eNB; wherein the configuration message includes a measurement object and reporting configuration, the measurement object indicating a frequency needing to be measured, and the reporting configuration indicating a measurement report condition, the measurement report condition being that a measurement result of a neighboring cell is better than a sum of a measurement result of a cell transmitting a PUCCH to which a secondary eNB corresponds (SPCell) and a predefined order value, or being that a measurement result of a neighboring cell is better than a first threshold value and a measurement result of an SPCell is worse than a second threshold value, and the neighboring cell being a cell at the frequency indicated in the measurement object;
wherein, contents of the measurement object and reporting configuration have been described in detail in Embodiment 1, the contents of which being incorporated herein, and being not going to be described herein any further;
step 802: measuring a serving cell and a cell at the frequency needing to be measured indicated in the measurement object by the terminal according to the configuration message, and reporting a measurement result by the terminal when the measurement report condition indicated in the reporting configuration is satisfied;
wherein, contents of measuring the channels by the terminal according to the measurement object and reporting configuration configured by the eNB have also been described in detail in Embodiment 1, the contents of which being incorporated herein, and being not going to be described herein any further.

With the channel measurement method of this embodiment, channel conditions of the SPCell in a small cell system may be ensured efficiently.

An embodiment of the present disclosure further provides a channel measurement apparatus, as described in Embodiment 5 below. As principles of the apparatus for solving problems are similar to that of the method of Embodiment 4, the implementation of the method of Embodiment 4 may be referred to for the implementation of the apparatus, with identical contents being not going to be described herein any further.

### Embodiment 5

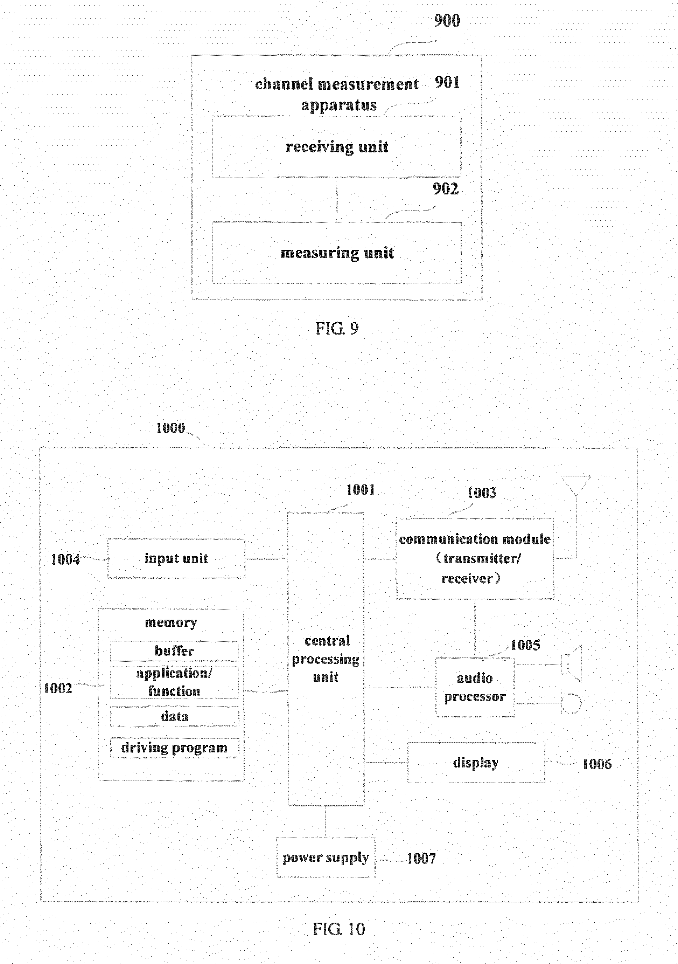

An embodiment of the present disclosure provides a channel measurement apparatus, applicable to a terminal (UE) in a small cell system. FIG 9 is a schematic diagram of a structure of the channel measurement apparatus 900. As shown in FIG. 9, the channel measurement apparatus 900 includes:
a receiving unit 901 configured to receive a configuration message transmitted by an eNB; wherein the configuration message includes a measurement object and reporting configuration, the measurement object indicating a frequency needing to be measured, and the reporting configuration indicating a measurement report condition, the measurement report condition being that a measurement result of a neighboring cell is better than a sum of a measurement result of a cell transmitting a PUCCH to which a secondary eNB corresponds (SPCell) and a predefined order value, or being that a measurement result of a neighboring cell is better than a first threshold value and a measurement result of an SPCell is worse than a second threshold value, and the neighboring cell being a cell at the frequency indicated in the measurement object; and
a measuring unit 902 configured to measure a serving cell and a cell at the frequency needing to be measured indicated in the measurement object according to the configuration message, and report a measurement result when the measurement report condition indicated in the reporting configuration is satisfied.

In this embodiment, contents of the measurement object and reporting configuration received by the receiving unit 901 and contents of measuring channels according to the measurement object and reporting configuration by the measuring unit 902 have been described in detail in Embodiment 1, which are incorporated herein, and shall not be described herein any further.

With the channel measurement apparatus of this embodiment, the channel conditions of the SPCell in the small cell system may be efficiently ensured.

### Embodiment 6

An embodiment of the present disclosure further provides UE, including the channel measurement apparatus as described in Embodiment 5 above.

FIG. 10 is a schematic diagram of a system constitute of the UE 1000 of this embodiment. As shown in FIG. 10, the UE 1000 may include a central processing unit 1001 and a memory 1002, the memory 1002 being coupled to the central processing unit 1001. It should be noted that this figure is illustrative only, and other types of structures may also be used, so as to supplement or replace this structure and achieve telecommunications function or other functions.

In an implementation, the functions of the channel measurement apparatus may be integrated into the central processing unit 1001. In this implementation, the central processing unit 1001 may be configured to:
receive a configuration message transmitted by an eNB; wherein the configuration message includes a measurement object and reporting configuration, the measurement object indicating a frequency needing to be measured, and the reporting configuration indicating a measurement report condition, the measurement report condition being that a measurement result of a neighboring cell is better than a sum of a measurement result of a cell transmitting a PUCCH to which a secondary eNB corresponds (SPCell) and a predefined order value, or being that a measurement result of a neighboring cell is better than a first threshold value and a measurement result of an SPCell is worse than a second threshold value, and the neighboring cell being a cell at the frequency indicated in the measurement object; and
measure a serving cell and a cell at the frequency needing to be measured indicated in the measurement object according to the configuration message, and report a measurement result when the measurement report condition indicated in the reporting configuration is satisfied.

In another implementation, the channel measurement apparatus and the central processing unit 1001 may be configured separately. For example, the channel measurement apparatus may be configured as a chip connected to the central processing unit 1001, with its functions being realized under control of the central processing unit 1001.

As shown in FIG. 10, the UE 1000 may further include a communication module 1003, an input unit 1004, an audio processor 1005, a display 1006, and a power supply 1007. The prior art may be referred to for realization of these components. It should be noted that the UE 1000 does not necessarily include all the parts shown in FIG. 10, and furthermore, the UE 1000 may include parts not shown in FIG 10, and the prior art may be referred to.

As shown in FIG. 10, the central processing unit 1001 is sometimes referred to as a controller or control, and may include a microprocessor or other processor devices and/or logic devices. The central processing unit 1001 receives input and controls operations of every components of the UE 1000.

In this implementation, the memory 1002 may be, for example, one or more of a buffer memory, a flash memory, a hard drive, a mobile medium, a volatile memory, a nonvolatile memory, or other suitable devices, which may store predefined or preconfigured information, and may further store a program executing related information. And the central processing unit 1001 may execute the program stored in the memory 1002, so as to realize information storage or processing, etc. Functions of other parts are similar to those of the prior art, which shall not be described herein any further. The parts of the receiver 1000 may be realized by specific hardware, firmware, software, or any combination thereof, without departing from the scope of the present disclosure.

With the UE of this embodiment, the channel conditions of the SPCell in the small cell system may be efficiently ensured.

### Embodiment 7

An embodiment of the present disclosure further provides a communication system, including an eNB and a terminal.

In this embodiment, the eNB configures the terminal with a measurement object and reporting configuration; wherein the measurement object indicates a frequency needing to be measured, and the reporting configuration indicates a measurement report condition, the measurement report condition being that a measurement result of a neighboring cell is better than a sum of a measurement result of a cell transmitting a PUCCH to which a secondary eNB corresponds and a predefined order value, or being that a measurement result of a neighboring cell is better than a first threshold value and a measurement result of a cell transmitting a PUCCH to which a secondary eNB corresponds is worse than a second threshold value, and the neighboring cell being a cell at the frequency indicated in the measurement object. In this embodiment, the eNB may be realized by the eNB described in Embodiment 3, the contents of which being incorporated herein, and being not going to be described herein any further.

In this embodiment, the terminal measures a serving cell and a cell at the frequency needing to be measured indicated in the measurement object according to the configuration message, and reports a measurement result when the measurement report condition indicated in the reporting configuration is satisfied. In this embodiment, the terminal may be realized by the UE described in Embodiment 6, the contents of which being incorporated herein, and being not going to be described herein any further.

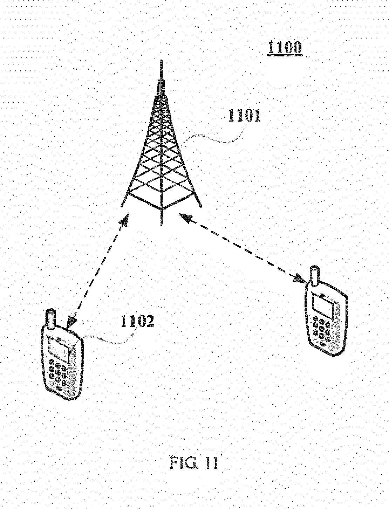

FIG. 11 is a schematic diagram of a structure of the communication system of the embodiment of the present disclosure. As shown in FIG 11, the communication system 1100 includes an eNB 1101 and a terminal 1102. In this embodiment, the eNB 1101 may be the eNB 700 described in Embodiment 3. In a small cell system, that is, in a case of dual connectivity, besides the eNB 1101 taken as an MeNB, the communication system may further include a secondary eNB, i.e. an SeNB. And the terminal 1102 may be the UE 1000 described in Embodiment 6.

As the eNB 700 and the UE 1000 have been described in detail in embodiments 3 and 6, the contents of them are incorporated herein, and shall not be described herein any further.

With the communication system of this embodiment, the channel conditions of the SPCell in the small cell system may be efficiently ensured.

An embodiment of the present disclosure further provides a computer-readable program, wherein when the program is executed in an eNB, the program enables the eNB to carry out the method for configuring channel measurement as described in Embodiment 1.

An embodiment of the present disclosure provides a storage medium in which a computer-readable program is stored, wherein the computer-readable program enables an eNB to carry out the method for configuring channel measurement as described in Embodiment 1.

An embodiment of the present disclosure further provides a computer-readable program, wherein when the program is executed in UE, the program enables the UE to carry out the channel measurement method as described in Embodiment 4.

An embodiment of the present disclosure provides a storage medium in which a computer-readable program is stored, wherein the computer-readable program enables UE to carry out the channel measurement method as described in Embodiment 4.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure, which is defined by the claims.

## Claims

1. An apparatus (500, 600) for configuring channel measurement, comprising:
a configuring unit (401) configured to configure a terminal (1102) with a measurement object and reporting configuration;
wherein the measurement object indicates a frequency needing to be measured, and the reporting configuration indicates a measurement report criteria,
the measurement report criteria being satisfied when a measurement result of a neighboring cell on the frequency indicated in the measurement object is better than a sum of a measurement result of a serving cell configured for transmission of PUCCH associated with a secondary eNB and a predefined order value, or
the measurement report criteria being satisfied when a measurement result of a neighboring cell on the frequency indicated in the measurement object is better than a first threshold value and a measurement result of the serving cell configured for transmission of PUCCH associated with the secondary eNB is worse than a second threshold value.

2. The apparatus (500, 600) according to claim 1, wherein the frequency indicated in the measurement object comprises:
a frequency at which a cell in a secondary cell group or at a secondary cell eNB of the terminal (1102) is, except the frequency at which the cell transmitting a PUCCH associated with the secondary eNB is; or
a frequency at which a cell in a secondary cell group or at a secondary cell eNB of the terminal (1102) is; or
a frequency different from a frequency at which a cell in a primary cell group or at a primary cell eNB of the terminal (1102) is; or
a frequency different from a frequency at which a cell transmitting a PUCCH associated with a primary eNB is; or
a frequency different from a frequency at which the cell transmitting a PUCCH associated with the secondary eNB is; or
a frequency different from a frequency at which a cell transmitting a PUCCH associated with the primary eNB is and a frequency at which the cell transmitting a PUCCH associated with the secondary eNB is.

3. The apparatus (500) according to claim 1, wherein the apparatus (500) further comprises:
a deciding unit (402) configured to decide whether to change the serving cell configured for transmission of PUCCH associated with the secondary eNB for the terminal (1102) according to a measurement result and a decision factor when the apparatus (500) receives the measurement result fed back by the terminal (1102).

4. The apparatus (500) according to claim 3, wherein the apparatus (500) further comprises:
a first notifying unit (403) configured to notify the terminal (1102) to change the serving cell configured for transmission of PUCCH associated with the secondary eNB in a downlink when the apparatus (500) decides to change the serving cell configured for transmission of PUCCH associated with the secondary eNB for the terminal (1102).

5. The apparatus (600) according to claim 1, wherein the apparatus (600) further comprises:
a transmitting unit (404) configured to, when the apparatus (600) receives a measurement result fed back by the terminal (1102), transmit the measurement result or a measurement result of the serving cell configured for transmission of PUCCH associated with the secondary eNB in the measurement result to the secondary eNB, so that the secondary eNB decides whether to change the serving cell configured for transmission of PUCCH associated with the secondary eNB for the terminal (1102) according to the measurement result and a decision factor.

6. The apparatus (600) according to claim 5, wherein the apparatus (600) further comprises:
a second notifying unit (405) configured to notify the terminal (1102) to change the serving cell configured for transmission of PUCCH associated with the secondary eNB in a downlink when the apparatus (600) receives what is fed back by the secondary eNB that the serving cell configured for transmission of PUCCH associated with the secondary eNB is to be changed for the terminal (1102).

7. A channel measurement apparatus (900), comprising:
a receiving unit (901) configured to receive a configuration message transmitted by an eNB;
wherein the configuration message comprises a measurement object and reporting configuration, the measurement object indicating a frequency needing to be measured, and the reporting configuration indicating a measurement report criteria,
the measurement report criteria being satisfied when a measurement result of a neighboring cell on the frequency indicated in the measurement object is better than a sum of a measurement result of a serving cell configured for transmission of PUCCH associated with a secondary eNB and a predefined order value, or
the measurement report criteria being satisfied when a measurement result of a neighboring cell on the frequency indicated in the measurement object is better than a first threshold value and a measurement result of the serving cell configured for transmission of PUCCH associated with the secondary eNB is worse than a second threshold value; and
a measuring unit (902) configured to measure the serving cell and a cell on the frequency needing to be measured indicated in the measurement object according to the configuration message, and report a measurement result when the measurement report criteria indicated in the reporting configuration is satisfied.

8. The apparatus (900) according to claim 7, wherein the frequency indicated in the measurement object comprises:
a frequency at which a cell in a secondary cell group or at a secondary cell eNB of the terminal (1102) is, except the frequency at which the cell transmitting a PUCCH associated with the secondary eNB is; or
a frequency at which a cell in a secondary cell group or at a secondary cell eNB of the terminal (1102) is; or
a frequency different from a frequency at which a cell in a primary cell group or at a primary cell eNB of the terminal (1102) is; or
a frequency different from a frequency at which a cell transmitting a PUCCH associated with a primary eNB is; or
a frequency different from a frequency at which the cell transmitting a PUCCH associated with the secondary eNB is; or
a frequency different from a frequency at which a cell transmitting a PUCCH associated with the primary eNB is and a frequency at which the cell transmitting a PUCCH associated with the secondary eNB is.

9. A communication system (1100), comprising an eNB (1101) and a terminal (1102), wherein,
the eNB (1101) is adapted to configure the terminal (1102) with a measurement object and reporting configuration; wherein the measurement object indicates a frequency needing to be measured, and the reporting configuration indicates a measurement report criteria,
the measurement report criteria being satisfied when a measurement result of a neighboring cell on the frequency indicated in the measurement object is better than a sum of a measurement result of a serving cell configured for transmission of PUCCH associated with a secondary eNB and a predefined order value, or
the measurement report criteria being satisfied when a measurement result of a neighboring cell on the frequency indicated in the measurement object is better than a first threshold value and a measurement result of the serving cell configured for transmission of PUCCH associated with the secondary eNB is worse than a second threshold value;
and the terminal (1102) is adapted to measure the serving cell and a cell on the frequency needing to be measured indicated in the measurement object according to the measurement object and reporting configuration, and reports a measurement result when the measurement report criteria indicated in the reporting configuration is satisfied.

## Patentansprüche

1. Vorrichtung (500, 600) zur Kanalmessungskonfiguration, umfassend:
eine Konfigurationseinheit (401), die konfiguriert ist, ein Endgerät (1102) mit einem Messobjekt und einer Berichtskonfiguration zu konfigurieren;
wobei das Messobjekt eine zu messende Frequenz angibt, die gemessen werden muss, und die Berichtskonfiguration ein Messberichtskriterium angibt,
wobei die Messberichtskriterien erfüllt sind, wenn ein Messergebnis einer benachbarten Zelle auf der in dem Messobjekt angegebenen Frequenz besser ist als eine Summe eines Messergebnisses einer bedienenden Zelle, die für eine Übertragung eines PUCCH konfiguriert ist, der einem sekundären eNB und einem vordefinierten Ordnungswert zugeordnet ist, oder
die Messberichtskriterien erfüllt sind, wenn ein Messergebnis einer benachbarten Zelle auf der in dem Messobjekt angegebenen Frequenz besser als ein erster Schwellenwert ist, und ein Messergebnis der bedienenden Zelle, die für die Übertragung eines PUCCH konfiguriert ist, der dem sekundären eNB zugeordnet ist, schlechter als ein zweiter Schwellenwert ist.

2. Vorrichtung (500, 600) nach Anspruch 1, wobei die in dem Messobjekt angegebene Frequenz umfasst:
eine Frequenz, bei der sich eine Zelle in einer sekundären Zellgruppe oder ein sekundärer Zellen-eNB des Endgeräts (1102) befindet, mit Ausnahme der Frequenz, bei der die Zelle einen PUCCH sendet, der dem sekundären eNB zugeordnet ist; oder
eine Frequenz, bei der sich eine Zelle in einer sekundären Zellgruppe oder ein sekundärer Zellen-eNB des Endgeräts (1102) befindet; oder
eine Frequenz, die sich von einer Frequenz unterscheidet, bei der sich eine Zelle in einer primären Zellgruppe oder ein primärer Zellen-eNB des Endgeräts (1102) befindet; oder
eine Frequenz, die sich von einer Frequenz unterscheidet, bei der sich eine Zelle befindet, die einen PUCCH sendet, der einem primären eNB zugeordnet ist; oder
eine Frequenz, die sich von einer Frequenz unterscheidet, bei der sich die Zelle befindet, die einen PUCCH sendet, der dem sekundären eNB zugeordnet ist; oder
eine Frequenz, die sich von einer Frequenz, bei der sich eine Zelle befindet, die einen PUCCH sendet, der dem primären eNB zugeordnet ist, und einer Frequenz, bei der sich die Zelle befindet, die einen PUCCH sendet, der dem sekundären eNB zugeordnet ist, unterscheidet.

3. Vorrichtung (500) nach Anspruch 1, wobei die Vorrichtung (500) ferner umfasst:
eine Entscheidungseinheit (402), die konfiguriert ist, zu entscheiden, ob die bedienende Zelle, die für eine Übertragung eines PUCCH konfiguriert ist, der dem sekundären eNB für das Endgerät (1102) zugeordnet ist, zu ändern ist, gemäß einem Messergebnis und einem Entscheidungsfaktor, wenn die Vorrichtung (500) das von dem Endgerät (1102) zurückgemeldete Messergebnis empfängt.

4. Vorrichtung (500) nach Anspruch 3, wobei die Vorrichtung (500) ferner umfasst:
eine erste Mitteilungseinheit (403), die konfiguriert ist, dem Endgerät (1102) mitzuteilen, die bedienende Zelle, die für eine Übertragung eines PUCCH konfiguriert ist, der dem sekundären eNB in einer Abwärtsstrecke zugeordnet ist, zu ändern, wenn die Vorrichtung (500) entscheidet, die bedienende Zelle, die für eine Übertragung eines PUCCH konfiguriert ist, der dem sekundären eNB für das Endgerät (1102) zugeordnet ist, zu ändern.

5. Vorrichtung (600) nach Anspruch 1, wobei die Vorrichtung (600) ferner umfasst:
eine Sendeeinheit (404), die konfiguriert ist, wenn die Vorrichtung (600) ein von dem Endgerät (1102) zurückgemeldetes Messergebnis empfängt, das Messergebnis, oder ein Messergebnis der bedienenden Zelle, die für eine Übertragung eines PUCCH konfiguriert ist, der dem sekundären eNB zugeordnet ist, in dem Messergebnis an den sekundären eNB zu senden, so dass der sekundäre eNB gemäß dem Messergebnis und einem Entscheidungsfaktor entscheidet, ob die bedienende Zelle, die für eine Übertragung eines PUCCH konfiguriert ist, die dem sekundären eNB für das Endgerät (1102) zugeordnet ist, zu ändern ist.

6. Vorrichtung (600) nach Anspruch 5, wobei die Vorrichtung (600) ferner umfasst:
eine zweite Mitteilungseinheit (405), die konfiguriert ist, dem Endgerät (1102) mitzuteilen, die bedienende Zelle, die für eine Übertragung eines PUCCH konfiguriert ist, der dem sekundären eNB in einer Abwärtsstrecke zugeordnet ist, zu ändern, wenn die Vorrichtung (600) empfängt, was von dem sekundären eNB zurückgemeldet wird, dass die bedienende Zelle, die für eine Übertragung eines PUCCH konfiguriert ist, der dem sekundären eNB zugeordnet ist, für das Endgerät (1102) zu ändern ist.

7. Kanalmessungsvorrichtung (900), umfassend:
eine Empfangseinheit (901), die konfiguriert ist, eine von einem eNB gesendete Konfigurationsnachricht zu empfangen;
wobei die Konfigurationsnachricht ein Messobjekt und eine Berichtskonfiguration umfasst,
wobei das Messobjekt eine Frequenz angibt, die gemessen werden muss, und die Berichtskonfiguration ein Messberichtskriterium angibt;
wobei die Messberichtskriterien erfüllt sind, wenn ein Messergebnis einer benachbarten Zelle auf der in dem Messobjekt angegebenen Frequenz besser ist als eine Summe eines Messergebnisses einer bedienenden Zelle, die für eine Übertragung eines PUCCH konfiguriert ist, der einem sekundären eNB und einem vordefinierten Ordnungswert zugeordnet ist, oder die Messberichtskriterien erfüllt sind, wenn ein Messergebnis einer benachbarten Zelle auf der in dem Messobjekt angegebenen Frequenz besser als ein erster Schwellenwert ist, und ein Messergebnis der bedienenden Zelle, die für die Übertragung eines PUCCH konfiguriert ist, der dem sekundären eNB zugeordnet ist, schlechter als ein zweiter Schwellenwert ist; und
eine Messeinheit (902), die konfiguriert ist, die bedienende Zelle und eine Zelle auf der Frequenz, die gemessen werden muss, die in dem Messobjekt angegeben ist, gemäß der Konfigurationsnachricht zu messen, und ein Messergebnis zu melden, wenn die in der Berichtskonfiguration angegebenen Messberichtskriterien erfüllt sind.

8. Vorrichtung (900) nach Anspruch 7, wobei die in dem Messobjekt angegebene Frequenz umfasst:
eine Frequenz, bei der sich eine Zelle in einer sekundären Zellgruppe oder ein sekundärer Zellen-eNB des Endgeräts (1102) befindet, mit Ausnahme der Frequenz, bei der die Zelle einen PUCCH sendet, der dem sekundären eNB zugeordnet ist; oder
eine Frequenz, bei der sich eine Zelle in einer sekundären Zellgruppe oder ein sekundärer Zellen-eNB des Endgeräts (1102) befindet; oder
eine Frequenz, die sich von einer Frequenz unterscheidet, bei der sich eine Zelle in einer primären Zellgruppe oder ein primärer Zellen-eNB des Endgeräts (1102) befindet; oder
eine Frequenz, die sich von einer Frequenz unterscheidet, bei der sich eine Zelle befindet, die einen PUCCH sendet, der einem primären eNB zugeordnet ist; oder
eine Frequenz, die sich von einer Frequenz unterscheidet, bei der sich die Zelle befindet, die einen PUCCH sendet, der dem sekundären eNB zugeordnet ist; oder
eine Frequenz, die sich von einer Frequenz, bei der sich eine Zelle befindet, die einen PUCCH sendet, der dem primären eNB zugeordnet ist, und einer Frequenz, bei der sich die Zelle befindet, die einen PUCCH sendet, der dem sekundären eNB zugeordnet ist, unterscheidet.

9. Kommunikationssystem (1100), umfassend einen eNB (1101) und ein Endgerät (1102), wobei der eNB (1101) dazu angepasst ist, das Endgerät (1102) mit einem Messobjekt und einer Berichtskonfiguration zu konfigurieren; wobei das Messobjekt eine Frequenz angibt, die gemessen werden muss, und die Berichtskonfiguration ein Messberichtskriterium angibt, wobei die Messberichtskriterien erfüllt sind, wenn ein Messergebnis einer benachbarten Zelle auf der in dem Messobjekt angegebenen Frequenz besser ist als eine Summe eines Messergebnisses einer bedienenden Zelle, die für eine Übertragung eines PUCCH konfiguriert ist, der einem sekundären eNB und einem vordefinierten Ordnungswert zugeordnet ist, oder die Messberichtskriterien erfüllt sind, wenn ein Messergebnis einer benachbarten Zelle auf der in dem Messobjekt angegebenen Frequenz besser als ein erster Schwellenwert ist, und ein Messergebnis der bedienenden Zelle, die für die Übertragung eines PUCCH konfiguriert ist, der dem sekundären eNB zugeordnet ist, schlechter als ein zweiter Schwellenwert ist;
und das Endgerät (1102) dazu angepasst ist, die bedienende Zelle und eine Zelle auf der Frequenz, die gemessen werden muss, die in dem Messobjekt angegeben ist, gemäß dem Messobjekt und der Berichtskonfiguration zu messen, und ein Messergebnis zu melden, wenn die in der Berichtskonfiguration angegeben Messberichtskriterien erfüllt sind.

## Revendications

1. Appareil (500, 600) destiné à configurer une mesure de canal, comprenant :
une unité de configuration (401) configurée de manière à configurer un terminal (1102) avec un objet de mesure et une configuration de compte rendu ;
dans lequel l'objet de mesure indique une fréquence devant être mesurée, et la configuration de compte rendu indique un critère de compte rendu de mesure ;
le critère de compte rendu de mesure étant satisfait lorsqu'un résultat de mesure d'une cellule voisine sur la fréquence indiquée dans l'objet de mesure est supérieur à une somme d'un résultat de mesure d'une cellule de desserte configurée en vue d'une transmission de canal PUCCH associé à une station eNB secondaire et d'une valeur d'ordre prédéfinie ; ou
le critère de compte rendu de mesure étant satisfait lorsqu'un résultat de mesure d'une cellule voisine sur la fréquence indiquée dans l'objet de mesure est supérieur à une première valeur de seuil, et lorsqu'un résultat de mesure de la cellule de desserte configurée en vue d'une transmission de canal PUCCH associé à la station eNB secondaire est inférieur à une seconde valeur de seuil.

2. Appareil (500, 600) selon la revendication 1, dans lequel la fréquence indiquée dans l'objet de mesure comprend :
une fréquence à laquelle se situe une cellule dans un groupe de cellules secondaires ou au niveau d'une station eNB de cellule secondaire du terminal (1102), à l'exception de la fréquence à laquelle se situe la cellule transmettant un canal PUCCH associé à la station eNB secondaire ; ou
une fréquence à laquelle se situe une cellule dans un groupe de cellules secondaires ou au niveau d'une station eNB de cellule secondaire du terminal (1102) ; ou
une fréquence différente d'une fréquence à laquelle se situe une cellule dans un groupe de cellules primaires ou au niveau d'une station eNB de cellule primaire du terminal (1102) ; ou
une fréquence différente d'une fréquence à laquelle se situe une cellule transmettant un canal PUCCH associé à une station eNB primaire ; ou
une fréquence différente d'une fréquence à laquelle se situe la cellule transmettant un canal PUCCH associé à la station eNB secondaire ; ou
une fréquence différente d'une fréquence à laquelle se situe une cellule transmettant un canal PUCCH associé à la station eNB primaire et d'une fréquence à laquelle se situe la cellule transmettant un canal PUCCH associé à la station eNB secondaire.

3. Appareil (500) selon la revendication 1, dans lequel l'appareil (500) comprend en outre :
une unité décisionnelle (402) configurée de manière à décider s'il convient de changer la cellule de desserte configurée en vue d'une transmission de canal PUCCH associé à la station eNB secondaire pour le terminal (1102), selon un résultat de mesure et un facteur de décision, lorsque l'appareil (500) reçoit le résultat de mesure renvoyé par le terminal (1102).

4. Appareil (500) selon la revendication 3, dans lequel l'appareil (500) comprend en outre :
une première unité de notification (403) configurée de manière à notifier au terminal (1102) de changer la cellule de desserte configurée en vue d'une transmission de canal PUCCH associé à la station eNB secondaire sur une liaison descendante, lorsque l'appareil (500) décide de changer la cellule de desserte configurée en vue d'une transmission de canal PUCCH associé à la station eNB secondaire pour le terminal (1102).

5. Appareil (600) selon la revendication 1, dans lequel l'appareil (600) comprend en outre :
une unité de transmission (404) configurée de manière à, lorsque l'appareil (600) reçoit un résultat de mesure renvoyé par le terminal (1102), transmettre le résultat de mesure ou un résultat de mesure de la cellule de desserte configurée en vue d'une transmission de canal PUCCH associé à la station eNB secondaire dans le cadre du résultat de mesure, à la station eNB secondaire, de sorte que la station eNB secondaire décide s'il convient de changer la cellule de desserte configurée en vue d'une transmission de canal PUCCH associé à la station eNB secondaire pour le terminal (1102), selon le résultat de mesure et un facteur de décision.

6. Appareil (600) selon la revendication 5, dans lequel l'appareil (600) comprend en outre :
une seconde unité de notification (405) configurée de manière à notifier au terminal (1102) de changer la cellule de desserte configurée en vue d'une transmission de canal PUCCH associé à la station eNB secondaire sur une liaison descendante, lorsque l'appareil (600) reçoit le résultat de mesure, renvoyé par la station eNB secondaire, indiquant que la cellule de desserte configurée en vue d'une transmission de canal PUCCH associé à la station eNB secondaire doit être changée pour le terminal (1102).

7. Appareil de mesure de canal (900), comprenant :
une unité de réception (901) configurée de manière à recevoir un message de configuration transmis par une station eNB ;
dans lequel le message de configuration comprend un objet de mesure et une configuration de compte rendu, l'objet de mesure indiquant une fréquence devant être mesurée, et la configuration de compte rendu indiquant un critère de compte rendu de mesure ;
le critère de compte rendu de mesure étant satisfait lorsqu'un résultat de mesure d'une cellule voisine sur la fréquence indiquée dans l'objet de mesure est supérieur à une somme d'un résultat de mesure d'une cellule de desserte configurée en vue d'une transmission de canal PUCCH associé à une station eNB secondaire et d'une valeur d'ordre prédéfinie ; ou
le critère de compte rendu de mesure étant satisfait lorsqu'un résultat de mesure d'une cellule voisine sur la fréquence indiquée dans l'objet de mesure est supérieur à une première valeur de seuil, et lorsqu'un résultat de mesure de la cellule de desserte configurée en vue d'une transmission de canal PUCCH associé à la station eNB secondaire est inférieur à une seconde valeur de seuil ; et
une unité de mesure (902) configurée de manière à mesurer la cellule de desserte et une cellule sur la fréquence devant être mesurée indiquée dans l'objet de mesure, selon le message de configuration, et à rendre compte d'un résultat de mesure lorsque le critère de compte rendu de mesure indiqué dans la configuration de compte rendu est satisfait.

8. Appareil (900) selon la revendication 7, dans lequel la fréquence indiquée dans l'objet de mesure comprend :
une fréquence à laquelle se situe une cellule dans un groupe de cellules secondaires ou au niveau d'une station eNB de cellule secondaire du terminal (1102), à l'exception de la fréquence à laquelle se situe la cellule transmettant un canal PUCCH associé à la station eNB secondaire ; ou
une fréquence à laquelle se situe une cellule dans un groupe de cellules secondaires ou au niveau d'une station eNB de cellule secondaire du terminal (1102) ; ou
une fréquence différente d'une fréquence à laquelle se situe une cellule dans un groupe de cellules primaires ou au niveau d'une station eNB de cellule primaire du terminal (1102) ; ou
une fréquence différente d'une fréquence à laquelle se situe une cellule transmettant un canal PUCCH associé à une station eNB primaire ; ou
une fréquence différente d'une fréquence à laquelle se situe la cellule transmettant un canal PUCCH associé à la station eNB secondaire ; ou
une fréquence différente d'une fréquence à laquelle se situe une cellule transmettant un canal PUCCH associé à la station eNB primaire et d'une fréquence à laquelle se situe la cellule transmettant un canal PUCCH associé à la station eNB secondaire.

9. Système de communication (1100), comprenant une station eNB (1101) et un terminal (1102), dans lequel :
la station eNB (1101) est apte à configurer le terminal (1102) avec un objet de mesure et une configuration de compte rendu ; dans lequel l'objet de mesure indique une fréquence devant être mesurée, et la configuration de compte rendu indique un critère de compte rendu de mesure ;
le critère de compte rendu de mesure étant satisfait lorsqu'un résultat de mesure d'une cellule voisine sur la fréquence indiquée dans l'objet de mesure est supérieur à une somme d'un résultat de mesure d'une cellule de desserte configurée en vue d'une transmission de canal PUCCH associé à une station eNB secondaire et d'une valeur d'ordre prédéfinie ; ou
le critère de compte rendu de mesure étant satisfait lorsqu'un résultat de mesure d'une cellule voisine sur la fréquence indiquée dans l'objet de mesure est supérieur à une première valeur de seuil, et lorsqu'un résultat de mesure de la cellule de desserte configurée en vue d'une transmission de canal PUCCH associé à la station eNB secondaire est inférieur à une seconde valeur de seuil ; et
le terminal (1102) est apte à mesurer la cellule de desserte et une cellule sur la fréquence devant être mesurée indiquée dans l'objet de mesure selon l'objet de mesure et la configuration de compte rendu, et le terminal rend compte d'un résultat de mesure lorsque le critère de compte rendu de mesure indiqué dans la configuration de compte rendu est satisfait.
